# EUROPEAN PATENT APPLICATION

(11) **EP 4 714 921 A1**
(43) Date of publication of application: **25.03.2026**
(21) Application number: 24201469.4
(22) Date of filing: 19.09.2024
(51) Int. Cl.: C04B 28/14, C04B 111/62, C04B 111/76

(54) **MINERAL HYBRID BINDER AND CONSTRUCTION COMPOSITION COMPRISING THE SAME**

(71) Applicant: Sika Technology AG, 6340 Baar (CH)
(72) Inventor: ENSELING, Tobias, 48720 Rosendahl (DE); KNOEBEL, Markus, 48720 Rosendahl (DE); SCHNEIDER, Nick, 48720 Rosendahl (DE)
(74) Representative: Sika Patent Attorneys

(57) **Abstract**

The present invention relates to fast curing mineral hybrid binders based on calcium aluminate cement and/or calcium sulfoaluminate cement as well as calcium sulfate hemihydrate and construction compositions comprising the same. The mineral hybrid binders and construction compositions are free of any calcium sulfate dihydrate or additionally comprise calcium sulfate dihydrate in a weight ratio of calcium sulfate dihydrate to calcium sulfate hemihydrate in the range of 1:100 to 1:180.

## Description

### Technical Field

The present invention relates to fast curing mineral hybrid binders based on calcium aluminate cement and/or calcium sulfoaluminate cement as well as calcium sulfate hemihydrate and construction compositions comprising the same. Such mineral hybrid binders and construction compositions are particularly useful as floor underlayment, screed, levelling compound, or putty.

### Background of the invention

It is generally a requirement in construction that a job site can be finished and released for use as soon as possible. It is therefore a requirement for many construction compositions to quickly set and harden to allow for any subsequent steps in construction early on and to contribute to the fast completion of construction. This requirement also exists when working at lower temperatures. Lower temperatures especially are temperatures below 10 °C, or even below the freezing point of water. Such temperatures can be reached on construction sites during winter in many regions.

It is known in the construction of floors to use fast drying materials based on mineral binders comprising calcium sulfate and aluminate cements. Suitable binders are, for example, disclosed in EP 3 126 308 A1 (Sika Technology AG). These binders offer the additional advantage of high dimensional stability and therefore are less prone to cracking.

However, fast curing materials often have the problem of short setting time. This means that time is short until a fast curing construction composition is not workable anymore. Thereby, the application of the construction composition on a job site, for example as a screed in floor assembly, may become difficult.

There is therefore a need to find solutions for mineral binders and construction compositions that can develop mechanical strength and/or attain a sufficiently dry surface also when cured at lower temperatures. Also there is a need to find fast curing construction compositions with a prolonged setting time.

### Summary of the invention

It is an object of the present invention to provide mineral binders and construction compositions that are fast curing and that can set and harden at lower temperatures. It is also an objective of the present invention to provide mineral binders and construction compositions that have a prolonged setting time. In particular, the setting time is sufficient for practical applications, especially in floor assembly. Additionally, the mineral binders and construction compositions should have a high dimensional stability during curing. It is another object of the present invention to provide methods for the application of construction compositions that are fast curing and that can set and harden at lower temperatures.

Surprisingly, it has been found that construction compositions based on a mineral hybrid binder comprising calcium aluminate cement and/or calcium sulfoaluminate cement and calcium sulfate hemihydrate set and harden at temperatures below 10 °C. Thereby, mechanical strength, especially compressive strength and flexural strength, is attained which is essentially the same as if hardened at 23 °C.

Equally surprisingly, construction compositions based on a mineral hybrid binder comprising calcium aluminate cement and/or calcium sulfoaluminate cement and calcium sulfate hemihydrate had prolonged setting times if calcium sulfate dihydrate is absent or is contained in a specific weight ratio to the calcium sulfate hemihydrate. At the same time shrinkage of such mineral hybrid binder upon curing is low.

Thereby, the setting can be measured, for example by the Vicat needle in accordance with standard EN 196-3:2017-03.

The terms "curing" and "hardening" are used interchangeably within the present context. They relate to the property of a mineral binder or construction composition to react with water and thereby develop mechanical strength. The mechanical strength in particular is the flexural strength and/or compressive strength which can be measured according to standard EN 1015-11 :2007-05.

The open time is the time for which a mineral binder or construction composition after mixing with water can still be worked without limitations. For example, the open time can be measured as the time after mixing with water for which one lot of mineral binder or construction composition can be applied and mixed with another lot applied without any visual defects or boundaries. Alternatively, the open time is the time between the mixing of a mineral binder or of a construction composition with water and the loss of plastic properties of the resulting mixture.

The objective of the present invention is solved by a mineral hybrid binder as claimed in claim 1 or in claim 2 respectively.

Further aspects of the present invention are the subject matter of independent claims. Preferred embodiments are the subject matter of dependent claims.

### Detailed Ways

In a first aspect, the present invention relates to a mineral hybrid binder for construction compositions, said mineral hybrid binder comprising or consisting of
a) calcium aluminate cement and/or calcium sulfoaluminate cement,
b) calcium sulfate hemihydrate,
c) calcium sulfate dihydrate, and
d) optionally calcium hydroxide,
   wherein the weight ratio of calcium aluminate cement and/or calcium sulfoaluminate cement to the sum of calcium sulfate hemihydrate, calcium sulfate dihydrate, and anhydrite is between 1:1 to 1:10, and
   wherein the weight ratio of calcium sulfate dihydrate to calcium sulfate hemihydrate is in the range of 1:100 to 1:180, preferably 1:125 to 1:170, more preferably 1:140 to 1:150.

In an alternative, the present invention relates to a mineral hybrid binder for construction compositions, said mineral hybrid binder comprising or consisting of
a) calcium aluminate cement and/or calcium sulfoaluminate cement,
b) calcium sulfate hemihydrate, and
d) optionally calcium hydroxide,
   wherein the weight ratio of calcium aluminate cement and/or calcium sulfoaluminate cement to the sum of calcium sulfate hemihydrate and anhydrite is between 1:1 to 1:10, and
   wherein the mineral hybrid binder does not comprise calcium sulfate dihydrate.

Within the present context, a mineral hybrid binder comprising calcium aluminate cement and/or calcium sulfoaluminate cement as well as calcium sulfate hemihydrate is also called a mineral hybrid binder.

Construction compositions in particular are concrete, mortars, screeds, renders, or putties.

A calcium aluminate cement (CAC) comprises mineral phases selected from one or more of CA₆, CA₂, CA, C₃A, C₁₂A₇ (with C: CaO; A: Al₂O₃). According to embodiments, a calcium aluminate cement has an aluminum content, measured as Al₂O₃, of at least 30 wt.-%, especially at least 35 wt.-%, in particular 35 - 58 wt.-%. Preferably, the calcium aluminate cement is according to standard EN 14647:2006-01. Other terms often used for calcium aluminate cement are high-alumina cements, ciment fondu, Tonerdeschmelzzement, or alumina fused cement.

A calcium sulfoaluminate (CSA) cement comprises the mineral phase C₄(A₃₋ₓFₓ)$ (C: CaO; A: Al₂O₃; F: Fe₂O₃; $: SO₃) where x is an integer of from 0 - 3. CSA cement of the present invention typically comprise further phases selected from aluminates or aluminosilicates (CA, C₃A, C₁₂A₇, C3AS with C: CaO; A: Al₂O₃; S: SiO₂), belite (C₂S with C: CaO, S: SiO₂), ferrites (C₂F, C₂AF, C₄AF, with C: CaO; A: Al₂O₃; F: Fe₂O₃), ternesite (C₅S₂$ with C: CaO, S: SiO₂; $: SOs). According to certain embodiments CSA cement of the present invention contains 15-75 w% C₄A₃$, 0-10 w% aluminates, 0-70 w% belite, 0-35 w% ferrites, and 0-20 w% ternesite, each based on the total dry weight of the CSA cement.

Calcium aluminate cement and/or calcium sulfoaluminate cement in the present context does not contain calcium sulfate. If CAC or CSA cement is used, any content of calcium sulfate contained therein is not considered to be part of such CAC or CSA cement. For example, if calcium sulfate anhydrite is contained in a commercial CAC or CSA cement the content of calcium sulfate anhydrite is not considered part of the CAC or CSA cement respectively but is considered as anhydrite.

Calcium sulfate hemihydrate can be α-calcium sulfate hemihydrate or β-calcium sulfate hemihydrate. According to preferred embodiments, the calcium sulfate hemihydrate is α-calcium sulfate hemihydrate.

It is preferred that the mineral hybrid binder of the present invention does not contain any other type of calcium sulfate besides calcium sulfate hemihydrate, calcium sulfate dihydrate and anhydrite.

According to embodiments, a mineral hybrid binder for construction compositions comprises or consists of, in each case relative to the total dry weight of the mineral hybrid binder:
a) 15 - 49 w%, preferably 15 - 30 w%, of calcium aluminate cement,
b) 49 - 84 w%, preferably 69 - 80 w% of calcium sulfate hemihydrate,
c) 0.1 - 0.8 w%, preferably 0.48 - 0.53 w% of calcium sulfate dihydrate, and
d) optionally calcium hydroxide, preferably 0.1 - 0.5 w% of calcium hydroxide,

wherein the weight ratio of calcium aluminate cement to the sum of calcium sulfate hemihydrate, calcium sulfate dihydrate, and anhydrite is between 1:1 to 1:6, preferably 1:2 to 1:5, and
wherein the weight ratio of calcium sulfate dihydrate to calcium sulfate hemihydrate is in the range of 1:100 to 1:180, preferably 1:125 to 1:170, more preferably 1:140 to 1:150.

Such mineral hybrid binder is particularly preferred in applications in thin layer.

According to embodiments, a mineral hybrid binder for construction compositions comprises or consists of, in each case relative to the total dry weight of the mineral hybrid binder:
a) 15 - 49 w%, preferably 15 - 30 w%, of calcium sulfoaluminate cement,
b) 49 - 84 w%, preferably 69 - 80 w% of calcium sulfate hemihydrate,
c) 0.1 - 0.8 w%, preferably 0.48 - 0.53 w% of calcium sulfate dihydrate, and
d) optionally calcium hydroxide, preferably 0.1 - 0.5 w% of calcium hydroxide,

wherein the weight ratio of calcium aluminate cement to the sum of calcium sulfate hemihydrate, calcium sulfate dihydrate, and anhydrite is between 1:1 to 1:6, preferably 1:2 to 1:5, and
wherein the weight ratio of calcium sulfate dihydrate to calcium sulfate hemihydrate is in the range of 1:100 to 1:180, preferably 1:125 to 1:170, more preferably 1:140 to 1:150.

Such mineral hybrid binder is particularly preferred in applications in thin layer.

According to embodiments, a mineral hybrid binder for construction compositions comprises or consists of, in each case relative to the total dry weight of the mineral hybrid binder:
a) 15 - 49 w%, preferably 15 - 30 w% of calcium aluminate cement,
b) 49 - 84 w%, preferably 69 - 80 w% of calcium sulfate hemihydrate,

wherein the weight ratio of calcium aluminate cement and/or calcium sulfoaluminate cement to the sum of calcium sulfate hemihydrate and anhydrite is between is between 1:1 to 1:6, preferably 1:2 to 1:5, and
wherein the mineral hybrid binder does not comprise calcium sulfate dihydrate Such mineral hybrid binder is particularly preferred in applications in thick layer.

According to embodiments, a mineral hybrid binder for construction compositions comprises or consists of, in each case relative to the total dry weight of the mineral hybrid binder:
a) 15 - 49 w%, preferably 15 - 30 w% of calcium sulfoaluminate cement,
b) 49 - 84 w%, preferably 69 - 80 w% of calcium sulfate hemihydrate,

wherein the weight ratio of calcium aluminate cement and/or calcium sulfoaluminate cement to the sum of calcium sulfate hemihydrate and anhydrite is between 1:1 to 1:6, preferably 1:2 to 1:5, and
wherein the mineral hybrid binder does not comprise calcium sulfate dihydrate.

Such mineral hybrid binder is particularly preferred in applications in thick layer.

A thick layer in particular refers to a layer thickness of between 10 mm - 60 mm, preferably 20 mm - 60 mm. A thin layer in particular refers to a layer thickness of not more than 10 mm, preferably 0.5 mm - 10 mm. The layer thickness thereby is the total thickness of the applied composition. Where the composition is applied in multiple layers, the layer thickness is the total thickness or sum of individual layers.

In another aspect, the present invention relates to a construction composition comprising, in each case relative to the total dry mass of the construction composition,
a) 15 - 70 w%, preferably 25 - 50 w%, of a mineral hybrid binder as described above, and
b) 25 - 80 w%, preferably 45 - 70 w% of at least one filler and/or aggregate.

All features and embodiments as described above also apply to this aspect.

The construction composition in particular can be a cementitious tile adhesive, a grouting material, a self-levelling underlayment, a self-levelling overlayment, a render, a repair mortar, a masonry thin join mortar or concrete, a screed, a levelling compound, a putty, a wall levelling compound for interior or exterior use, a non-shrink grout, a thin joint mortar, a waterproofing mortar, or an anchoring mortar.

Aggregates may be any material that is not reactive in the hydration reaction of mineral binders. Typical aggregates are e.g. rock, crushed stone, gravel, sand, in particular quartz sand or river sand, ground rock, recycled concrete, glass, expanded glass, hollow glass beads, glass ceramics, volcanic rock, pumice, perlite, vermiculite, quarry waste, or bio-based materials such as hemp. A particularly preferred aggregate is sand.

According to embodiments, a construction composition of the present invention may further comprise fillers, which are in particular selected from carbonate fillers, preferably in the form of finely ground calcium carbonate, such as limestone powder, or dolomite.

A suitable sand has, for example, a grading curve in the range from about 0 to 0.5 mm, preferably in the range from about 0.08 to 0.4 mm. Another suitable sand has, for example, a particle size in the range from about 0.1 to 1 mm, preferably from about 0.2 to 0.8 mm.

A suitable limestone powder has, for example, an average particle diameter in the range of 2.5 µm and not more than 5 w% of particles with a size of more than 65 µm.

A construction composition of the present invention may additionally comprise additives and admixtures common in concrete and mortar formulation. For example, the construction composition may comprise dispersants, plasticizers, superplasticizers, thickeners, water retention agents, dyes and/or pigments, defoamers, air-entraining agents, stabilizers, retarders, accelerators, activators, fibers, chromium (VI) reducers and/or flexibilizers.

According to embodiments, the construction composition of the present invention additionally comprises at least one polyol with a functionality of 4 or lower and with a density of OH-groups of at least 0.033 mol OH per g of polyol, preferably glycerin or erythritol. Such polyols are especially suitable to reduce the shrinkage upon curing and therefore further increase the dimensional stability of the construction composition.

According to embodiments, the at least one polyol is present in an amount of 0.5 - 5 w% relative to the mass of calcium aluminate cement and/or calcium sulfoaluminate cement.

According to embodiments, the construction composition of the present invention additionally comprises lithium carbonate or lithium sulfate, preferably 0.001 to 0.05 w% of lithium carbonate or lithium sulfate relative to the total dry mass of the construction composition. Lithium carbonate or lithium sulfate is particularly effective in accelerating the curing of mineral binders based on calcium aluminate cement and/or calcium sulfoaluminate cement.

According to embodiments, the construction composition of the present invention additionally comprises tartaric acid and/or one of its salts, preferably 0.005 to 0.15 w% of tartaric acid and/or one of its salts relative to the total dry mass of the construction composition. Tartaric acid and/or its salts are effective as retarders. Additionally, tartaric acid and its salts are effective in suppressing the expansion upon setting and hardening of mineral binders based on calcium aluminate cement and/or calcium sulfoaluminate cement. Sodium or potassium tartrate or the mixed salt sodium/potassium tartrate is preferred.

It is particularly preferred that the construction composition comprises a mixture of the above described polyol, lithium carbonate or lithium sulfate, and tartaric acid or its salts.

It has surprisingly been found that construction compositions comprising mineral hybrid binders, said mineral hybrid binders comprising or consisting of calcium aluminate cement and/or calcium sulfoaluminate cement, calcium sulfate hemihydrate, optionally calcium sulfate dihydrate, and optionally calcium hydroxide, with a weight ratio of calcium aluminate cement and/or calcium sulfoaluminate cement to the sum of calcium sulfate hemihydrate, calcium sulfate dihydrate, and anhydrite is between 1:1 to 1:10, are particularly suitable where curing at low temperatures is required.

Curing of construction compositions based on mineral binders is typically done at temperatures between 5 °C and 40 °C. If hardened at lower temperatures, mechanical strength development typically is delayed and final design strength is either reached after very long time or not at all. Additionally, the time needed to reach to a surface sufficiently dry for further work is prolonged. Mineral hybrid binders and construction compositions of the present invention develop mechanical strength also when hardened at lower temperatures. Additionally, also surfaces sufficiently dry for further work are reached when cuing takes place at lower temperatures. For example, the time needed for curing of a composition of the present invention to develop sufficient surface dryness and allow for further work can be no more than 24 hours, preferably no more than 10 hours, more preferably in the range of 3 to 8 hours, particularly preferably 4 to 6 hours.

Therefore, in another aspect the present invention relates to a method for applying a construction composition to a substrate, said method comprising the steps of:
(i) mixing a construction composition comprising a mineral hybrid binder with water to form a fluid or paste-like composition, said mineral hybrid binder comprising or consisting of
   a) calcium aluminate cement and/or calcium sulfoaluminate cement,
   b) calcium sulfate hemihydrate,
   c) optionally calcium sulfate dihydrate, and
   d) optionally calcium hydroxide,
   wherein the weight ratio of calcium aluminate cement and/or calcium sulfoaluminate cement to the sum of calcium sulfate hemihydrate, calcium sulfate dihydrate, and anhydrite is between 1:1 to 1:10,
(ii) applying the fluid or paste-like composition to a substrate, and
(iii) curing the fluid or paste-like composition,
   wherein at least one, preferably all, of steps (i) - (iii) are done at a temperature of not more than 10 °C, preferably not more than 5 °C, more preferably not more than 4 °C.

All features and embodiments as described above also apply to this aspect.

In particular, the at least one, preferably all, of steps (i) - (iii) are done at a temperature of between -10 °C and 10 °C, preferably between -5°C and 5 °C, especially between 0 °C and 4 °C.

Methods and devices for mixing of a construction composition with water are not particular limited and are known to the person skilled in the art. It is for example possible to mix the construction composition with water by means of a handheld agitator, Hobart mixer, portable concrete mixer, mixing truck, mixing bucket, paddle mixer, jet mixer, screw mixer, auger mixer, horizontal single shaft mixer, twin shaft paddle mixer, vertical shaft mixer, ribbon blender, orbiting mixer, change-can mixer, tumbling vessel, vertical agitated chamber or air agitated operations. Mixing can be continuously, semi-continuously or batch-wise. Continuous mixing offers the advantage of a high material throughput.

An amount of water to be mixed with the construction composition to achieve a fluid or paste-like composition especially is in a weight ratio of water to dry construction composition between 0.10 to 0.40, preferably 0.12 to 0.30, more preferably 0.15 to 0.26. It is particularly preferred, that water in an amount sufficient to achieve self-levelling properties is mixed with the construction composition.

It has been shown that the construction composition develops relatively constant physical building properties as well as strength at different mixing ratios of construction composition and water. It is therefore possible, for example, to set different consistencies of the construction composition and still obtain constant physical building properties and/or strengths. This gives the user particular flexibility.

It is possible to apply the fluid or paste-like composition to a substrate by any means known to the person skilled in the art. The method of application naturally depends on the consistency of the composition. According to one embodiment, the fluid or paste-like composition is applied by trowel, brush or roller. According to another embodiment, the fluid or paste-like composition is applied in a spray application.

The composition can be applied in one step, or it can be applied in two or more successive steps in several superimposed layers. By applying in several layers, a higher total layer thickness can be achieved.

Substrate to which the fluid or paste-like composition can be applied are not particularly limited. Substrates contemplated, as well as all kinds of standard substrates, such as mineral screeds or dry screeds, include, in particular, floor coverings, such as wooden board floors, fixed woodblock, wood particle board, wood-cement boards, old substrates with ceramic coverings, old substrates based on screeds of any kind or concrete, and also substrates prone to deformation, such as bituminous asphalt screed. A particularly suitable substrate is an anhydrite screed or concrete. It is generally preferred that the fluid or paste-like composition is applied to substrates to which it adheres well after drying.

It is possible to apply further layers of material in a method of the present invention. For example, it is possible to apply a primer layer to the substrate before applying the fluid or paste-like composition of the present invention. This is especially useful to increase adhesion or to increase water resistance of the assembly. Preferred primer are based on aqueous dispersions.

Setting and hardening starts with the mixing of the construction composition with water. A construction composition of the present invention sets and hardens at a temperature of not more than 10 °C, preferably not more than 5 °C, more preferably not more than 4 °C. Curing is typically done at a pressure of approximately 1013 mbar. A construction composition of the present invention will set and harden at very low to high relative humidity but not underwater.

After curing of the fluid or paste-like composition, it is possible to apply further layers of primer, waterproofing membrane, adhesive composition, and/or covering on top of the hardened construction composition. It is a particular advantage of the present invention that curing is fast and that the application of following layers of different materials can be done within short time.

According to embodiments, in a method of the present invention, the fluid or paste-like composition is applied in a layer thickness of not more than 10 mm, preferably 0.5 mm - 10 mm.

It has been found that where application of the fluid or paste-like composition in thin layer of not more than 10 mm is done, it is beneficial to use a higher amount of mineral hybrid binder in the construction composition and wherein the mineral hybrid binder comprises calcium sulfate dihydrate in a weight ratio to calcium sulfate hemihydrate as described above.

Therefore, according to embodiments, in a method of the present invention it is preferred that the mineral hybrid binder comprises calcium sulfate dihydrate and calcium sulfate hemihydrate in a weight ratio in the range of 1:100 to 1:180, preferably 1:125 to 1:170, more preferably 1:140 to 1:150. This is especially the case where the fluid or paste-like composition is applied in a layer thickness of not more than 10 mm, preferably 0.5 mm - 10 mm.

It has further been found that where application of the fluid or paste-like composition in thick layer of between 10 mm - 60 mm is done, it is beneficial to use a lower amount of mineral hybrid binder in the construction composition and wherein the mineral hybrid binder does not comprise calcium sulfate dihydrate.

Therefore, according to embodiments, in a method of the present invention it is preferred that the construction composition does not comprise calcium sulfate dihydrate and wherein the fluid or paste-like composition is applied in a layer thickness of between 10 mm - 60 mm, preferably 20 mm - 60 mm.

According to embodiments, in a method of the present invention, a construction composition comprising, in each case relative to the total dry weight of the construction composition,
a) 45 - 50 w% of a mineral hybrid binder, said mineral hybrid binder comprising or consisting of
   ai) calcium aluminate cement and/or calcium sulfoaluminate cement,
   aii) calcium sulfate hemihydrate,
   aiii) calcium sulfate dihydrate, and
   aiv) optionally calcium hydroxide,
   wherein the weight ratio of calcium aluminate cement and/or calcium sulfoaluminate cement to the sum of calcium sulfate hemihydrate, calcium sulfate dihydrate, and anhydrite is between 1:1 to 1:10, preferably 1:1 to 1:6, more preferably 1:2 to 1:5, and
   wherein the weight ratio of calcium sulfate dihydrate to calcium sulfate hemihydrate is in the range of 1:100 to 1:180, preferably 1:125 to 1:170, more preferably 1:140 to 1:150, and
b) 45 - 55 w% of at least one filler and/or aggregate,
is mixed with water to form a fluid or paste-like composition and subsequently the fluid or paste-like composition is applied to a substrate in a layer thickness of not more than 10 mm, preferably 0.5 mm - 10 mm.

Alternatively, in a method of the present invention a mineral hybrid binder or a construction composition not comprising calcium sulfate dihydrate is mixed with water and subsequently is applied in a layer thickness of between 10 mm - 60 mm, preferably 20 mm - 60 mm.

According to embodiments, in a method of the present invention, a construction composition comprising, in each case relative to the total dry weight of the construction composition,
a) 25 - 35 w% of a mineral hybrid binder, said mineral hybrid binder comprising or consisting of
   ai) calcium aluminate cement and/or calcium sulfoaluminate cement,
   aii) calcium sulfate dihydrate, and
   aiv) optionally calcium hydroxide,
   wherein no calcium sulfate dihydrate is present, and
   wherein the weight ratio of calcium aluminate cement and/or calcium sulfoaluminate cement to the calcium sulfate hemihydrate and anhydrite is between 1:1 to 1:10, preferably 1:1 to 1:6, more preferably 1:2 to 1:5, and
b) 50 - 70 w% of at least one filler and/or aggregate,
is mixed with water to form a fluid or paste-like composition and subsequently the fluid or paste-like composition is applied to a substrate in a layer thickness of between 10 mm - 60 mm, preferably 20 mm - 60 mm.

In another aspect, the present invention also relates to a hardened body, preferably a part of a building, especially a screed, obtained by hardening a mineral hybrid binder as described above or obtained by hardening a construction composition as described above.

### Examples

Construction compositions were prepared by dry mixing the ingredients as specified in the following table 1. Water was added in the amount as specified. The setting time was measured as the begin of setting by the Vicat needle in accordance with standard EN 196-3:2017-03.

Flexural strength (FS.) and compressive strength (C.S.) were measured according to standard EN 1015-11:2007-05 after curing at the temperature and for the time indicated in below table 1.

The following raw materials were used. CSA cement (49 w% C₄A₃$, 11 w% C₃AS₂, 7 w% C₂S, 2 w% C₁₂A₇, 22 w% C$ as separate anhydrate in below table 1). α-calcium sulfate hemihydrate, calcium sulfate dihydrate, calcium hydroxide, lithium carbonate, sodium tartrate, and glycerin were purchased from Sigma Aldrich and used as received. Quartz sand with particle size 0.1 - 1.0 mm was used. Limestone powder had particle size D90 < 90 microns. Additives are a mixture of superplasticizer, thickener, water retention agents, and redispersible polymer powder.

**Table 1: Reference example 1 (not according to the invention) and examples 1-1 and 1-2 (according to the invention)**

| | **Ref-1** | **1-1** | **1-2** |
|---|---|---|---|
| CSA cement [g] | 13.1 | 9.3 | 6.4 |
| Anhydrite [g] | 3.7 | 2.6 | 1.8 |
| Hemihydrate [g] | 50.8 | 36.0 | 21.3 |
| Dihydrate [g] | 0.25 | 0.25 | 0 |
| Ca(OH)₂ [g] | 0.2 | 0.12 | 0 |
| Li₂CO₃ [g] | 0.01 | 0.01 | 0.01 |
| Sodium tartrate [g] | 0.02 | 0.02 | 0.02 |
| Glycerin [g] | 0.25 | 0.25 | 0.25 |
| Quartz sand [g] | 22.2 | 39.3 | 48.8 |
| Limestone powder [g] | 7.3 | 10 | 19.2 |
| Additives [g] | 2.2 | 2.2 | 2.2 |
| w/p ratio | 0.22 | 0.2 | 0.17 |
| Setting time [min] | 65 | 72 | 86 |
| F.S. 6h @ 23 °C [MPa] | n.m. | 4.4 | n.m. |
| F.S. 6h @ 5 °C [MPa] | n.m. | 4.0 | n.m. |
| F.S. 28d @ 23 °C [MPa] | n.m. | 10.9 | n.m. |
| F.S. 28d @ 5 °C [MPa] | n.m. | 11.5 | n.m. |
| C.S. 6h @ 23 °C [MPa] | n.m. | 23 | n.m. |
| C.S. 6h @ 5 °C [MPa] | n.m. | 21 | n.m. |
| C.S. 28d @ 23 °C [MPa] | n.m. | 43 | n.m. |
| C.S. 28d @ 5 °C [MPa] | n.m. | 46 | n.m. |

| | | | |
|---|---|---|---|
| n.m.: not measured | | | |

It can be seen from the results in above table 1 that for example 1-1 the difference between flexural strength and compressive strength obtained within the same time at different temperature is insignificant for practical applications. It can also be seen that the setting time is prolonged for inventive compositions as compared to a non-inventive composition with a different weight ratio of calcium sulfate dihydrate to calcium sulfate hemihydrate.

## Claims

1. A mineral hybrid binder for construction compositions, said mineral hybrid binder comprising or consisting of
a) calcium aluminate cement and/or calcium sulfoaluminate cement,
b) calcium sulfate hemihydrate,
c) calcium sulfate dihydrate, and
d) optionally calcium hydroxide,
wherein the weight ratio of calcium aluminate cement and/or calcium sulfoaluminate cement to the sum of calcium sulfate hemihydrate, calcium sulfate dihydrate, and anhydrite is between 1:1 to 1:10, and
wherein the weight ratio of calcium sulfate dihydrate to calcium sulfate hemihydrate is in the range of 1:100 to 1:180, preferably 1:125 to 1:170, more preferably 1:140 to 1:150.

2. A mineral hybrid binder for construction compositions, said mineral hybrid binder comprising or consisting of
a) calcium aluminate cement and/or calcium sulfoaluminate cement,
b) calcium sulfate hemihydrate, and
d) optionally calcium hydroxide,
wherein the weight ratio of calcium aluminate cement and/or calcium sulfoaluminate cement to the sum of calcium sulfate hemihydrate and anhydrite is between 1:1 to 1:10, and
wherein the mineral hybrid binder does not comprise calcium sulfate dihydrate.

3. The mineral hybrid binder according to claim 1 or 2, **characterized in that** the calcium sulfate hemihydrate is α-calcium sulfate hemihydrate.

4. A construction composition comprising, in each case relative to the total dry mass of the construction composition,
a) 15 - 70 w%, preferably 25 - 50 w% of a mineral hybrid binder as claimed in any of claims 1 or 2 or 3, and
b) 25 - 80 w%, preferably 45 - 70 w% of at least one filler and/or aggregate.

5. The construction composition according to claim 4, additionally comprising at least one polyol with a functionality of 4 or lower and with a density of OH-groups of at least 0.033 mol OH per g of polyol, preferably glycerin or erythritol.

6. The construction composition according to claim 5, **characterized in that** the at least one polyol is present in an amount of 0.5 - 5 w% relative to the mass of calcium aluminate cement and/or calcium sulfoaluminate cement.

7. The construction composition according to at least one of claims 4-6, additionally comprising lithium carbonate or lithium sulfate, preferably 0.001 to 0.05 w% of lithium carbonate or lithium sulfate relative to the total dry mass of the construction composition.

8. The construction composition according to at least one of claims 4-7, additionally comprising tartaric acid and/or one of its salts, preferably 0.005 to 0.15 w% of tartaric acid and/or one of its salts relative to the total dry mass of the construction composition.

9. A method for applying a construction composition to a substrate comprising the steps of:
(i) mixing a construction composition comprising a mineral hybrid binder with water to form a fluid or paste-like composition, said mineral hybrid binder comprising or consisting of
a) calcium aluminate cement and/or calcium sulfoaluminate cement,
b) calcium sulfate hemihydrate,
c) optionally calcium sulfate dihydrate, and
d) optionally calcium hydroxide,
wherein the weight ratio of calcium aluminate cement and/or calcium sulfoaluminate cement to the sum of calcium sulfate hemihydrate, calcium sulfate dihydrate, and anhydrite is between 1:1 to 1:10,
(ii) applying the fluid or paste-like composition to a substrate, and
(iii) curing the fluid or paste-like composition,
wherein at least one, preferably all of steps (i) - (iii) are done at a temperature of not more than 10 °C, preferably not more than 5 °C, more preferably not more than 4 °C.

10. The method as claimed in claim 9, wherein the mineral hybrid binder comprises calcium sulfate dihydrate and calcium sulfate hemihydrate in a weight ratio in the range of 1:100 to 1:180, preferably 1:125 to 1:170, more preferably 1:140 to 1:150.

11. The method as claimed in any of claims 9 or 10, wherein the fluid or paste-like composition is applied in a layer thickness of not more than 10 mm, preferably 0.5 mm - 10 mm.

12. The method as claimed in claim 9, wherein the construction composition does not comprise calcium sulfate dihydrate and wherein the fluid or paste-like composition is applied in a layer thickness of between 10 mm - 60 mm, preferably 20 mm - 60 mm.

13. A hardened body, preferably a part of a building, especially a screed, obtained by hardening a mineral hybrid binder as claimed in any of claims 1 - 3 or obtained by hardening a construction composition as claimed in any of claims 4-8.
